# EUROPEAN PATENT SPECIFICATION

(11) **EP 1 759 127 B1**
(45) Date of publication and mention of the grant of the patent: **16.07.2008**
(21) Application number: 04745187.7
(22) Date of filing: 23.06.2004
(51) Int. Cl.: F16D 66/02

(54) **SYSTEM FOR FIXING AN ELECTRICAL CONNECTOR TO THE CALLIPER BODY OF A DISK BRAKE**
SYSTEM ZUR BEFESTIGUNG EINES ELEKTRISCHEN VERBINDERS AM BREMSSATTELKÖRPER EINER SCHEIBENBREMSE
SYSTEME DE FIXATION D'UN CONNECTEUR ELECTRIQUE AU CORPS D'ETRIER D'UN FREIN A DISQUE

(43) Date of publication of application: 07.03.2007
(73) Proprietor: Freni Brembo S.p.A., 24035 Curno (Bergamo) (IT)
(72) Inventor: CANOVA, Walter, I-24010 Sorisole (IT); CORTINOVIS, Gianpaolo, I-24044 Dalmine (IT); BONETTI, Fabrizio, I-23807 Merate (IT)
(74) Representative: Carangelo, Pierluigi
(86) International application number: PCT/IT2004/000362
(87) International publication number: WO 2006/001036

(56) References cited:
- EP-A- 0 757 188
- WO-A-03/046403
- WO-A-03/081074
- DE-A1- 4 431 724
- US-A- 4 183 012

## Description

The present invention relates to disk brakes and, more particularly, to a system for fixing an electrical connector to the calliper body of a disk brake as described in the preamble of Claim 1, and as for example is known from US-A-4 183 012.

It is well known and usual to equip disk brakes, be they of the disk or drum type, with devices capable of detecting the state of wear of the friction gaskets, generally known as wear indicators. The known types of wear indicators differ from each other on account of both the operating principle and their constructional configuration. Disk brakes for vehicles make extensive use of electric wear indicators that utilize a sensor associated with a pad of the brake callipers. These indicators transmit the signal provided by the sensor and indicative of the wear of the pad by means of an electric wire that terminates with a connector, which in its turn is connected by means of a corresponding electric contact element and another electric wire to a display device arranged, for example, on the dashboard of the vehicle.

To avoid the electric connector and/or the wires that extend therefrom or have to be connected thereto creating in some way obstruction problems during the assembly of the calliper body, thus rendering it more laborious to mount the latter on the hub-carrier of the vehicle, there has been proposed the solution described in the prior document WO03046403. As indicated in Figure 1, which is identical with a figure of said prior document, the known technique envisages a fixing system comprising a small supporting block 1 integral with the calliper body 2 and traversed by an at least partly threaded through-hole 3, a coupling element 4 and a fixing screw 5. The coupling element 5 is a foil realized in such a manner as to comprise a portion 4a for fixing the electrical connector 6 by means of a snap-type coupling and a holed portion 4b for fixing the foil to the support block 1 by means of a snap insertion and locking it with the fixing screw 5.

Though this solution fully achieves its purpose, it calls for relatively long processing times and therefore high costs for realizing the parts that constitute the fixing system. In fact, it requires additional processing of the support block 1, obtained in the stamping phase of the calliper body, in order to produce a hole in it and then providing this hole with the necessary thread. Furthermore, the mounting of the coupling element calls for a fixing screw 5.

The object of the present invention is to make available a fixing system that does not require any processing of the calliper body after its stamping and the use of additional locking elements, such as screws.

According to the invention, this object is attained by realizing a fixing system as defined and characterized in general terms in Claim 1.

The invention will be more readily understood from the following detailed description of an embodiment thereof, which is given by way of example and is therefore not to be considered limitative in any way, the description making reference to the attached drawings, of which:

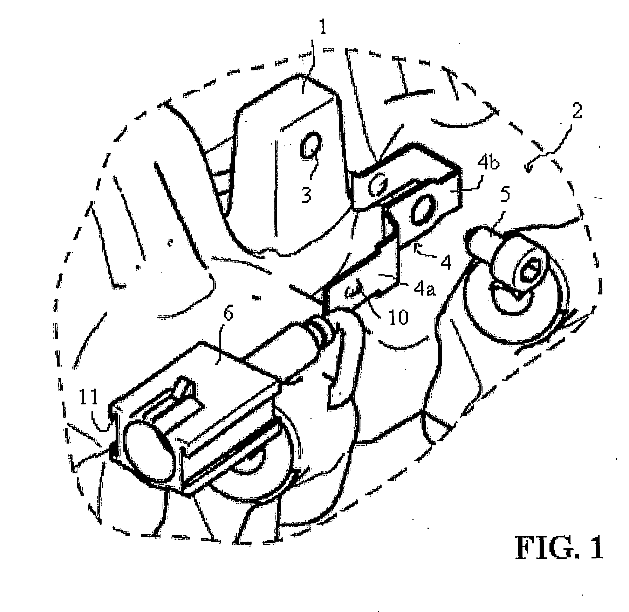

- Figure 1 shows a perspective view with detached parts of an enlarged detail of a calliper body that illustrates the fixing system in accordance with the prior art,
- Figure 2 shows a perspective view of a calliper body for disk brakes that comprises an element of the fixing system in accordance with the invention,
- Figure 3 shows a perspective view with detached parts of a calliper body with a fixing system in accordance with the invention,
- Figure 4 shows a cross section through the calliper body with the fixing system in accordance with the invention, and

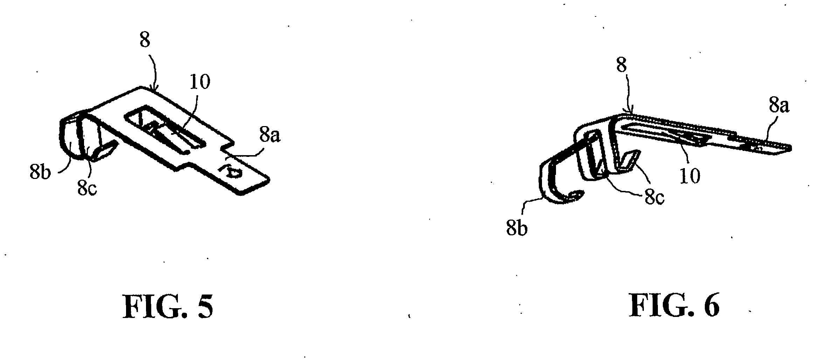

- Figures 5 and 6 show two perspective views of another element of the fixing system in accordance with the invention.

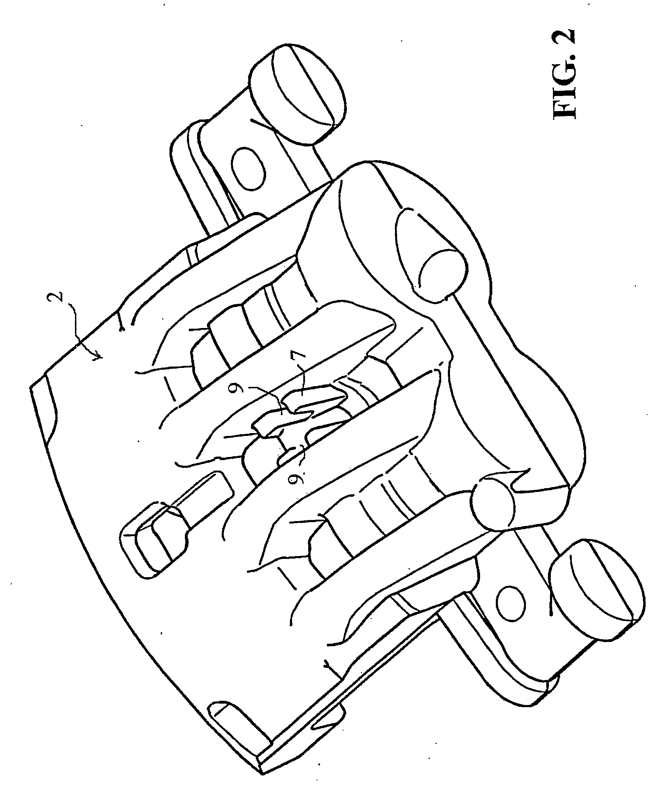

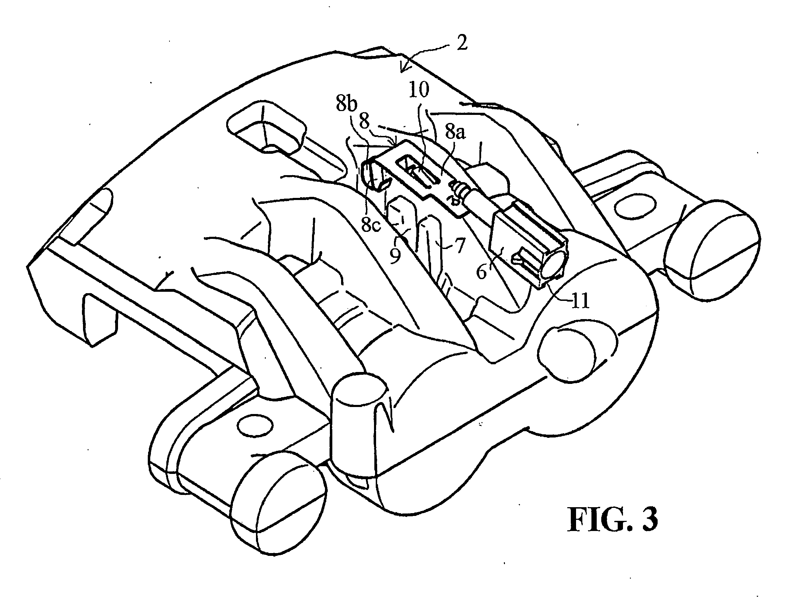

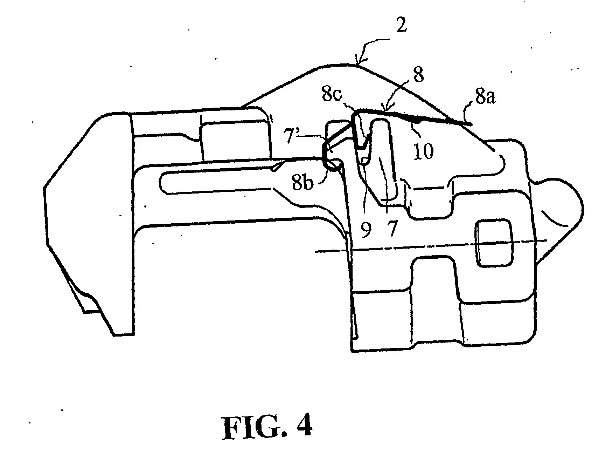

Referring in particular to Figures 2, 3 and 4, the fixing system of this example comprises a raised part 7 and a coupling element 8 in the form of an elastic foil having a first portion for fixing an electrical connector 6 and a second portion for attaching the foil to the calliper body. The raised part is obtained during the moulding phase of the calliper body and is shaped in such a manner as to be provided with two seatings 9 with a V-shaped profile, clearly visible in Figure 2 and partially also in Figure 3, and a tooth 7', which can be seen only in Figure 4. Following its moulding, the calliper body is not subjected to any further processing and for this reason its surface is characterized by a substantial roughness.

The coupling element 8 is an elastic steel foil that, following operations of shearing and folding, has a small tongue 8a on one side and on the other side is provided with an element in the form of a hook 8b and two small tongues 8c folded into a V. The tongue 8a has a projecting part 10 at the centre that is sheared and raised with respect to the plane of the tongue. The electrical connector 6 is fixed to the coupling element 8, letting the tongue 8a slide in a corresponding seating, in the present example a rail 11, along one side wall of the connector until the projection 10 comes to engage by means of a snap fit with a corresponding recess - not shown on the drawings - of the wall in question.

When the connector 6 is to be fixed to the calliper body 2, the coupling element 8 is positioned in such a way as to engage the hook-shaped element 8b with the corresponding tooth 7' and at the same time inserting, albeit without forcing, the two V-shaped tongues 8c in the respective seatings 9. Thereafter a sufficient force is applied to the coupling element to press the two V-shaped tongues 8c into their seatings 9. As a result of this operation, the ends of the two tongues become engaged with the rough surface of the walls of the seatings and, thanks to the elasticity of the material, exercise a considerable pressure on these walls, so that the coupling element 8 remains in position even when the force that acted on it during the insertion phase is no longer applied.

It should be noted that, once the forced insertion of the two V-shaped tongues 8c has been obtained, the end of the element 8b in the form of a hook tends to move away from the tooth 7'. Nevertheless, this does not compromise the fixing of the coupling element 8, because the pressure fit between the V-shaped tongues and the rough surface of the calliper body is sufficiently firm. For this reason the invention can be put into practice also with a coupling element 8 devoid of the part with the hook. However, the embodiment as here described is advantageous in case there occurs a slackening of the pressure fit. In that case the coupling element, notwithstanding its slackening, will remain in position and in contact with the calliper body thanks to the fact that the hook-shaped element is engaged with the tooth 7'.

Having obtained the definitive coupling of the foil element and the calliper body, one continues as indicated in the known technique by attaching the electrical connector by means of a snap coupling and completing all the other operations necessary for mounting the disk brake on the vehicle.

The object of the invention is fully attained inasmuch as the described fixing system does not call for any processing of the calliper body after moulding and the fixing of the connector to the calliper body is obtained without having to use such additional locking elements as, for example, screws. This thanks to the fact that the engagement of the elastic foil that constitutes the coupling element and the calliper body is assured by the rough surface of the snap-fit coupling seatings.

## Claims

1. A system for fixing an electrical connector (6) to the calliper body (2) of a disk brake comprising a wear sensor electrically connected to the electrical connector, said system comprising:
- fixing means formed as a single piece with the calliper body (2), comprising an insertion-type coupling seating (9) and
- an elastic foil element (8) comprising a first portion (8a) for fixing the electrical connector (6) and a second portion (8c) suitable for being inserted in the seating (9) of the fixing means,
**characterized in that**
the second portion (8c) of the elastic element (8) comprises at least one tongue bent into a V-shape and having an end that, when the tongue is inserted in said seating, is adapted to become engaged with a rough surface of a wall of said seating.

2. A fixing system in accordance with Claim 1, wherein the elastic foil element (8) comprises a third portion in the form of a hook (8b) and the fixing means comprise a corresponding hook-on element (7'), the third portion becoming engaged with the corresponding hook-on element when the second portion (8c) is inserted in the seating (9) of the fixing means.

3. A fixing system in accordance with Claim 2, wherein the fixing means are formed as raised parts (7) of the calliper body that define the insertion-type coupling seating (9) and the hook-on element (7').

4. A fixing system in accordance with any one of the preceding claims, wherein the first portion (8a) of the fixing means of the connector comprises a tongue capable of becoming engaged by means of a snap-type fit in a corresponding connector seating.

5. A disk brake comprising a fixing system in accordance with any one of the preceding claims.

## Patentansprüche

1. System zur Befestigung eines elektrischen Verbinders (6) am Bremssattelkörper (2) einer Scheibenbremse, der einen Abnutzungssensor aufweist, der mit dem elektrischen Verbinder elektrisch verbunden ist, wobei das System aufweist:
- Befestigungseinrichtungen, die mit dem Bremssattelkörper (2) als ein Einzelstück ausgebildet sind, die einen Einsetzkopplungssitz (9) aufweisen, und
- ein elastisches Folienelement (8), das einen ersten Abschnitt (8a) zur Befestigung des elektrischen Verbinders (6) und einen zweiten Abschnitt (8c) aufweist, der geeignet ist, in den Sitz (9) der Befestigungseinrichtungen eingesetzt zu werden,
**dadurch gekennzeichnet, daß**
der zweite Abschnitt (8c) des elastischen Elements (8) mindestens eine Zunge aufweist, die zu einer V-Form gebogen ist und ein Ende aufweist, das, wenn die Zunge in den Sitz eingesetzt wird, eingerichtet ist, mit einer rauhen Oberfläche einer Wand des Sitzes in Eingriff zu treten.

2. Befestigungssystem nach Anspruch 1, wobei das elastische Folienelement (8) einen dritten Abschnitt in der Form eines Hakens (8b) aufweist, und die Befestigungseinrichtungen ein entsprechendes Einhakelement (7') aufweisen, wobei der dritte Abschnitt mit dem entsprechenden Einhakelement in Eingriff tritt, wenn der zweite Abschnitt (8c) in den Sitz (9) der Befestigungseinrichtungen eingesetzt wird.

3. Befestigungssystem nach Anspruch 2, wobei die Befestigungseinrichtungen als erhabene Teile (7) des Bremssattelkörpers ausgebildet sind, die den Einsetzkopplungssitz (9) und das Einhakelement (7') definieren.

4. Befestigungssystem nach einem der vorhergehenden Ansprüche, wobei der erste Abschnitt (8a) der Befestigungseinrichtungen des Verbinders eine Zunge aufweist, die fähig ist, mittels einer Schnappbefestigung in einen entsprechenden Verbindersitz in Eingriff zu treten.

5. Scheibenbremse, die ein Befestigungssystem nach einem der vorhergehenden Ansprüche aufweist.

## Revendications

1. Système pour fixer un connecteur électrique (6) au corps d'étrier (2) d'un frein à disque comportant un capteur d'usure connecté électriquement au connecteur électrique, ledit système comportant :
- des moyens de fixation formés en une seule pièce avec le corps d'étrier (2), comportant un siège (9) d'accouplement du type à insertion, et
- un élément à mince feuille élastique (8) comportant une première partie (8a) pour la fixation du connecteur électrique (6) et une seconde partie (8c) apte à être insérée dans le siège (9) des moyens de fixation,
**caractérisé en ce que**
la seconde partie (8c) de l'élément élastique (8) comporte au moins une languette pliée en une forme en V et ayant une extrémité qui, lorsque la languette est insérée dans ledit siège, est apte à venir en prise avec une surface rugueuse d'une paroi dudit siège.

2. Système de fixation selon la revendication 1, dans lequel l'élément à mince feuille élastique (8) comporte une troisième partie sous la forme d'un crochet (8b) et les moyens de fixation comprennent un élément d'accrochage correspondant (7'), la troisième partie venant en prise avec l'élément d'accrochage correspondant lorsque la deuxième partie (8c) est insérée dans le siège (9) des moyens de fixation.

3. Système de fixation selon la revendication 2, dans lequel les moyens de fixation sont réalisés sous la forme de parties en relief (7) du corps d'étrier qui définissent le siège (9) d'accouplement du type à insertion et l'élément d'accrochage (7').

4. Système de fixation selon l'une quelconque des revendications précédentes, dans lequel la première partie (8a) des moyens de fixation du connecteur comporte une languette pouvant venir en prise au moyen d'un ajustement par encliquetage dans un siège de connecteur correspondant.

5. Frein à disque comportant un système de fixation selon l'une quelconque des revendications précédentes.
